# EUROPEAN PATENT SPECIFICATION

(11) **EP 3 000 672 B1**
(45) Date of publication and mention of the grant of the patent: **24.04.2019**
(21) Application number: 15169982.4
(22) Date of filing: 29.05.2015
(51) Int. Cl.: B60T 7/20, B60T 8/17, B60T 15/18, B60T 15/20, B60T 11/10

(54) **VALVE ASSEMBLY FOR TRAILER**
ANHÄNGERVENTILANORDNUNG
SYSTÈME DE SOUPAPE POUR REMORQUE

(30) Priority: 30.05.2014 IT MO20140160
(43) Date of publication of application: 30.03.2016
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 2 165 901
- EP-A1- 2 610 122
- DE-A1- 4 113 671
- DE-A1- 19 855 679
- DE-A1- 19 857 355
- DE-B- 1 178 309
- FR-A1- 2 137 563
- FR-A1- 2 275 347
- GB-A- 2 045 373
- US-A- 3 304 131
- US-A- 4 175 588
- US-A1- 2008 258 542

## Description

The present invention relates to a valve assembly, particularly for the management of the braking of a trailer.

As is known, to date towing vehicles are connected to the relative trailer by means of a connection device comprising a male coupling associated with the towing vehicle and a relative female coupling associated with the trailer.

More in particular, such connection device allows placing in communication with one another the braking system of the towing vehicle with that of the trailer, so that the braking of the towing vehicle by the operator also causes the braking of the towed trailer.

The braking system of the trailer is then driven by the braking system of the prime mover in order to synchronize the braking forces acting on same.

Some recently introduced regulations require the connection device between the towing vehicle and its trailer to be provided with a pair of male couplings suitable to be inserted inside a pair of relative female couplings.

In particular, the female couplings are connectable to a control line able to supply the braking system of the trailer, and to an additional line able to deactivate the automatic and/or parking brake of the trailer itself respectively. Examples of valve assemblies of this type are retrievable in US 2008/258542 A1, US 3 304 131 A, DE 11 783 09 B, FR 2 275 347 A1, US 4 175 588A, and GB 204 5373 A.

The main aim of the present invention is to provide a single valve assembly, which is connectable to the male couplings of the towing vehicle, which is able to perform various safety or emergency functions.

Within this aim, one object is to allow the operation of the parking and/or automatic brake of the trailer in emergency conditions, e.g. in the case of a possible breaking along the control line of the trailer or to speed up the automatic or mechanical braking of the trailer itself.

Another object of the present invention is to obtain the zero setting of the pressure in the male couplings by manual command to allow hydraulically coupling the trailer.

Another object of the present invention is to provide a valve assembly which allows to overcome the mentioned drawbacks of the prior art within the ambit of a simple, rational, easy, effective to use and low cost solution.

The objects stated above are achieved by the present valve assembly according to claim 1.

Other characteristics and advantages of the present invention will become better evident from the description of a preferred but not exclusive embodiment of a valve assembly, illustrated by way of an indicative, but non-limiting, example in the accompanying drawings, in which:
Figure 1 is a sectional view of a valve assembly according to the invention, in a first embodiment, with the spool in the normal operating position and the first lever in rest position;
Figure la is a side elevation view of the valve assembly of Figure 1;
Figure 2 is a sectional view of the valve assembly of Figure 1 with the spool in the first emergency position and the first lever in rest position;
Figure 2a is a side elevation view of the valve assembly of Figure 2;
Figure 3 is a sectional view of the valve assembly of Figure 1 with the spool in the first emergency position and the first lever in the working position;
Figure 3a is a side elevation view of the valve assembly of Figure 3;
Figure 4 is a sectional view of the valve assembly of Figure 1 with the spool in the second emergency position;
Figure 4a is a side elevation view of the valve assembly of Figure 4;
Figure 5 is an axonometric view of a valve assembly according to the invention, in a second embodiment, with the spool in the normal operating position and the thrust element in the inactive configuration;
Figure 5a is a side elevation view of the valve assembly of Figure 5;
Figure 6 is a sectional view of the valve assembly of Figure 5 with the spool in the first emergency position and the thrust element in the inactive configuration;
Figure 6a is a side elevation view of the valve assembly of Figure 6;
Figure 7 is a sectional view of the valve assembly of Figure 5 with the spool in the first emergency position and the thrust element in the active configuration;
Figure 7a is a side elevation view of the valve assembly of Figure 7;
Figure 8 is a sectional view of the valve assembly of Figure 5 with the spool in the second emergency position;
Figure 8a is a side elevation view of the valve assembly of Figure 8;
Figure 9 is a sectional view of a valve assembly according to the invention, in a third embodiment, with the valve means in the closing configuration;
Figure 10 is a sectional view of the valve assembly of Figure 9, with the valve means in the opening configuration.

With particular reference to such figures, globally indicated with reference number 1 is a valve assembly, particularly suitable for managing the braking of a trailer towed by a towing vehicle.

The assembly 1 comprises a body 2 having a seat 3 communicating with at least a main port 4 and a secondary port 5, which are connectable to the braking system of a towing vehicle and able to receive a work fluid at a first and at a second pressure, respectively, an unloading port 6 connectable to an unloading tank, a control port 7 connectable to a first male coupling 8 of the towing vehicle, an additional port 9 connectable to a second male coupling 10 of the towing vehicle.

The first and second male couplings 8 and 10 are connectable to respective female couplings (not shown in the illustrations), in turn connectable to the trailer, to convey the work fluid at the pressure required for operating the brakes of the trailer and at the pressure required for deactivating the parking and/or automatic brake of the trailer itself, respectively.

Within the seat 3 a spool 11 is accommodated in a sliding manner, movable at least between the following working positions: a normal operating position, wherein the main port 4 and the secondary port 5 are put in communication with the control port 7 and with the additional port 9, respectively; a first emergency position, wherein the additional port 9 is put in communication with the unloading port 6, the main port 4 remaining in communication with the control port 7; and a second emergency position, wherein both the control port 7 and the additional port 9 are put in communication with the unloading port 6.

More in particular, the ports 4, 5, 6, 7 and 9, are put in communication with the seat 3 by means of relative channels 12, 13, 14, 15, 16 and 17 which face the seat itself by means of respective gaps.

As can be seen in the illustrations, the main port 4 is put in communication with the seat 3 by means of a first and a second channel 12 and 13; the secondary port 5 is put in communication with the seat 3 by means of a third channel 14; the unloading port 6 is put in communication with the seat 3 by means of a fourth channel 15; the control port 7 is put in communication with the seat 3 by means of a fifth channel 16; the additional port 9 is put in communication with the seat 3 by means of a sixth channel 17.

The spool 11 is then suitably shaped, or has a series of grooves, so as to open and close the connection between the gaps of the channels 12, 14, 15, 16 and 17 depending on the specific working positions.

The ports 4, 5, 6 and the ports 7, 9, and consequently the relative gaps, are arranged opposite the seat 3 with respect to the spool 11.

More in detail, the ports 4, 5, 6 and the ports 7, 9 are defined on two opposite faces of the body 2.

As can be seen in the illustrations, the seat 3 has an elongated shape and has two closing elements 18, 19 arranged at its opposite longitudinal extremities. Advantageously, the assembly 1 comprises first elastic means 20 placed between the stop element 19 of the seat 3 and the spool 11, which first elastic means are able to act on the spool itself to counteract the displacement thereof from the normal operating position to the first emergency position.

Preferably, between the main port 4 and the seat 3 are placed two connection channels 12 and 13, of which a first channel 12, along which a restriction 21 is arranged and the gap of which faces the side surface of the seat itself, and a second channel 13, communicating with a first thrust chamber 22 defined within the seat 3 and acting on the spool 11 on the opposite side of the first elastic means 20.

The assembly 1 further comprises at least a first duct 23 for the transit of the work fluid, which is put in communication on one side with the first channel 12, downstream of the restriction 21 with respect to the advancement direction of the work fluid, and on the other with a second thrust chamber 24 acting on the spool 11 on the opposite side of the first thrust chamber 22. In the embodiment shown in the illustrations, the first duct 23 is defined within the spool 11; alternative embodiments cannot however be ruled out wherein the first duct 23 is defined externally to the spool 11.

As can be seen in the illustrations, the first and second thrust chambers 22 and 24 act on the opposite extremities of the spool 11. More in particular, the first thrust chamber 22 is interposed between the stop element 18 and a first extremity of the spool 11 while the second thrust chamber 24 is interposed between the stop element 19 and a second extremity of the spool 11.

In the normal operating position, the pressure in the first and second thrust chambers 22 and 24 is substantially the same and the first elastic means 20 are able to push the spool 11 up against the stop element 18.

The first emergency position occurs the moment, e.g., following the breaking of a pipe in the hydraulic circuit of the trailer, the transit time of the work fluid for actuating the brakes of the trailer increases or increases its flow rate and a difference in pressure is produced at the ends of the restriction 21 which results in a difference in pressure between the first and the second thrust chambers 22 and 24, the pressure in the first thrust chamber 22 being greater than that in the second chamber 24, such as to determine the movement of the spool 11 in contrast to the first elastic means 20.

Following this condition, the spool 11 is then brought to rest against the stop element 19.

Moreover, in this emergency position, due to the new position taken by the grooves of the spool 11, the additional port 9 is no longer connected to the secondary port 5 but to the unloading port 6. This means that, following the zero setting of the pressure in the additional port, the parking and/or automatic brake of the trailer is activated

Suitably, the restriction 21 is sized in such a way as not to operate in conditions of normal operation.

The assembly 1 also comprises second elastic means 25 placed between the stop element 19 and the body 2 and able to counteract the displacement of the spool 11 to the second emergency position. In particular, the second elastic means 25 are placed between the stop element 19 and a closing element 42 of the seat 3, locked together with the body 2.

In the second emergency position the spool 11 puts in communication the control port 7 with the unloading port 6 by means of a second duct 26 defined within the spool itself.

Advantageously, the assembly 1 comprises command means 30 operable to command the displacement of the spool 11 from the normal operating position at least to the first emergency position.

Preferably, the command means 30 are also operable to command the displacement of the spool 11 to the second emergency position. In particular, the displacement of the spool 11 to the second emergency position is commanded when the hydraulic connection is to be made between the male and female couplings in the case of the former being under pressure.

In the embodiments shown in the illustrations 5 to 8, the command means 30 comprise at least a first lever 27 arranged externally to the body 2, connectable to the parking brake of the towing vehicle and able to interact with the spool 11. This first lever 27 is movable between a rest position, wherein the spool 11 is free to move due to the pressures present in the first and in the second thrust chambers 22 and 24, and a working position, wherein the spool 11 is pushed to the first emergency position.

More in detail, the first lever 27 is associated movable in rotation with the body 2 and is coupled to a pin 28 able to interact mechanically with the spool 11. The pin 28 e.g. has a tooth 28a which fits inside a groove obtained on the spool 11 and which is able to cooperate with an abutment element 29 defined by the spool itself.

In the embodiments shown in the illustrations 1 to 4, the command means 30 also comprise a second lever 31 arranged externally to the body 2, manually operable and able to interact with the spool 11. The second lever 31 is therefore operable by an operator to command the displacement of the spool 11 to the second emergency position.

Suitably, the second lever 31 is also associated movable in rotation with the body 2 and is coupled to the pin 28.

In this embodiment, the first lever 27 drives in rotation the second lever 31, by means of a guide element 32, during its stroke from the rest position to the working position, the pin 28 rotating by an angle corresponding to that made by the first lever itself. The second lever 31 is able to perform a further stroke with respect to the first lever 27, which remains stationary and resting against a stop element 33, during which the pin 28 rotates by a further angle.

Alternatively, the first and the second levers 27 and 31 are defined in a single body piece between them.

In an alternative embodiment to those just described, the command means 30 comprise at least a solenoid valve 34 able to command the displacement of the spool 11 to the first emergency position.

More in particular, the solenoid valve 34 has an activation channel 35 communicating with a third thrust chamber 36 which acts on a thrust element 37 able to interact with the spool 11, where the thrust element 37 is movable in contrast to third elastic means 38. The solenoid valve 34 is operable to selectively put in communication the activation channel 35, and therefore the third thrust chamber 36, with the secondary port 5 or with the unloading port 6 by means of respective channels 39 and 40, respectively.

Preferably, the thrust element 37 comprises a small pin 41, inserted sliding through the stop element 18, able to interact with the spool 11 on the opposite side of the first elastic means 20. The thrust element 37 is movable between an inactive configuration, wherein the spool 11 is free to move between the normal operating position and the first emergency position, and an active configuration, wherein it operates on the spool itself to move it from the normal operating position to the first emergency position.

In this embodiment, in which the command means 30 comprise a solenoid valve 34, the type of command sent from the solenoid valve itself to the thrust element 37 can be of the positive or negative type.

In the first case, the thrust element 37 is able to move from the inactive to the active configuration as a result of the increase in pressure in the third thrust chamber 36, in contrast to the third elastic means 38. The moment the solenoid valve 34 puts in communication the third thrust chamber 36 with the secondary port 5, the thrust element 37 is then pushed towards its active configuration, whereas when the solenoid valve 34 puts in communication the third thrust chamber 36 with the unloading port 6, the thrust element 37 returns to the inactive configuration due to the effect of the thrust of the third elastic means 38. More in detail, the third elastic means 38 are placed between the stop element 18 and the thrust element 37, the third thrust chamber 36 being defined between the body 2 and the thrust element itself.

In the second case, however, the thrust element 37 is able to move from the active configuration to the inactive configuration following the increase in pressure in the third thrust chamber 36 in contrast to the third elastic means 38. The moment the solenoid valve 34 puts in communication the third thrust chamber 36 with the secondary port 5, the thrust element 37 moves from the active configuration, in which it is maintained by the third elastic means 38 in their rest configuration, to the inactive configuration, in contrast to the third elastic means themselves.

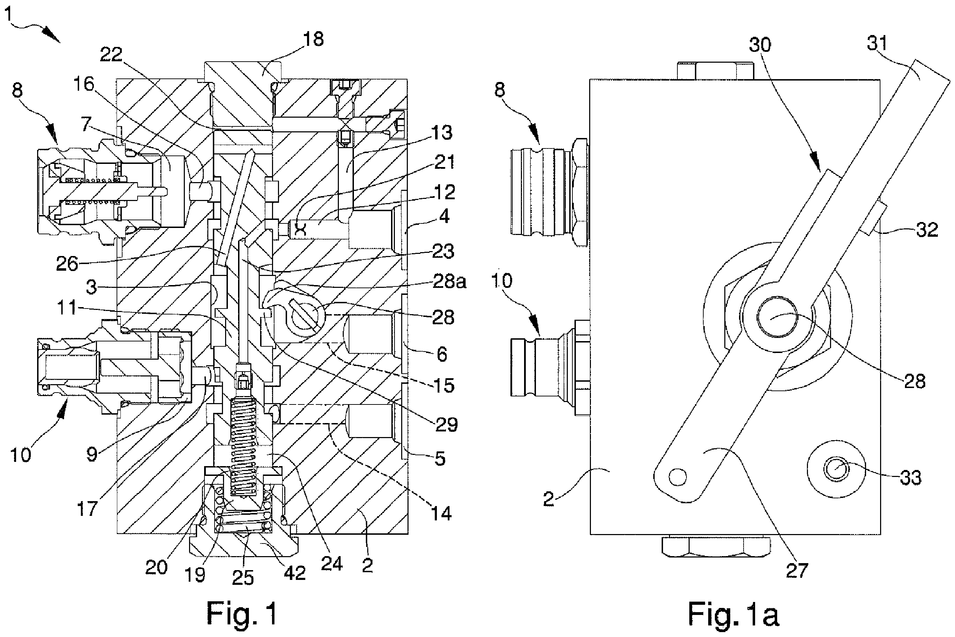

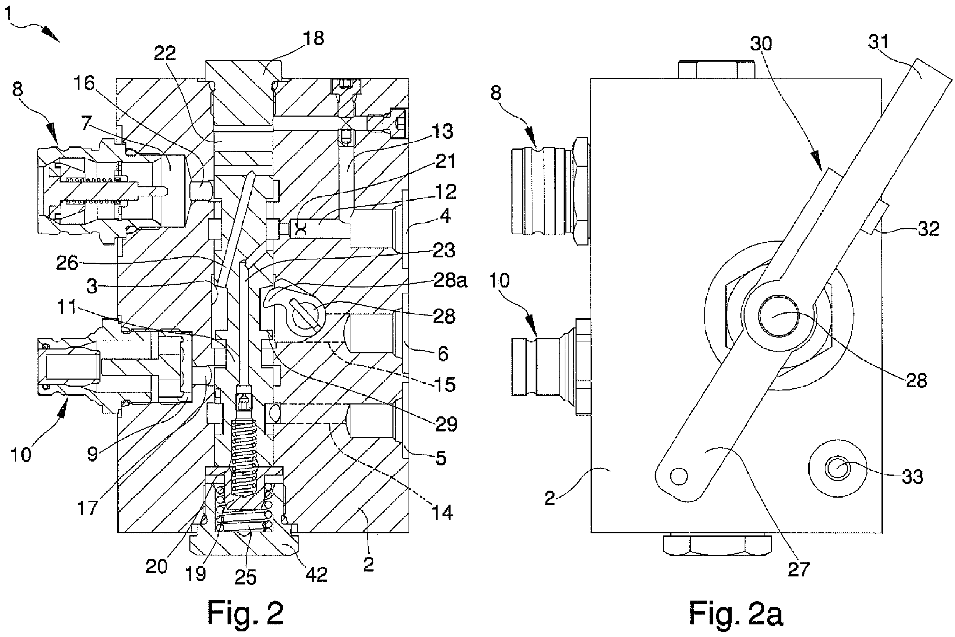

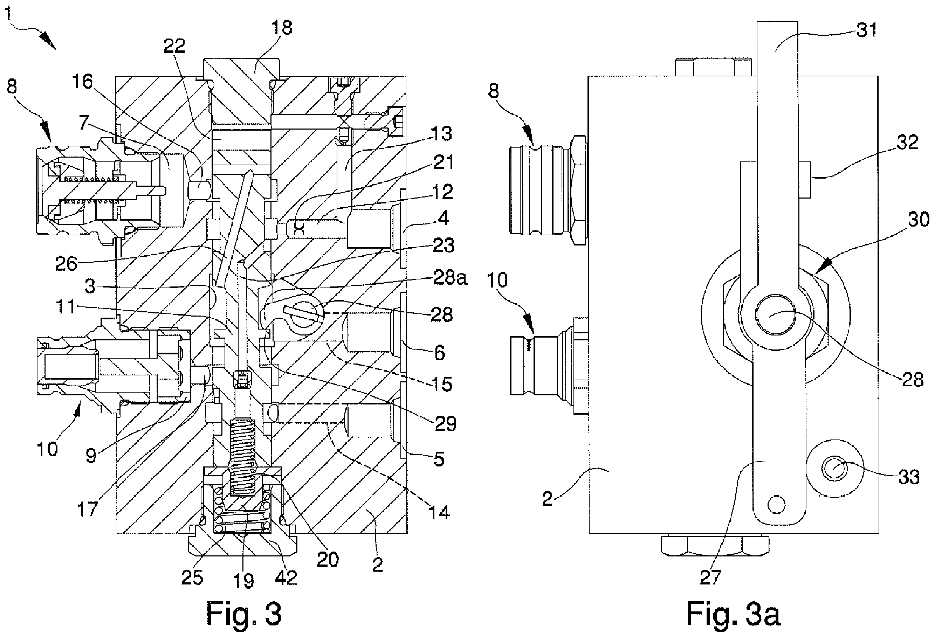

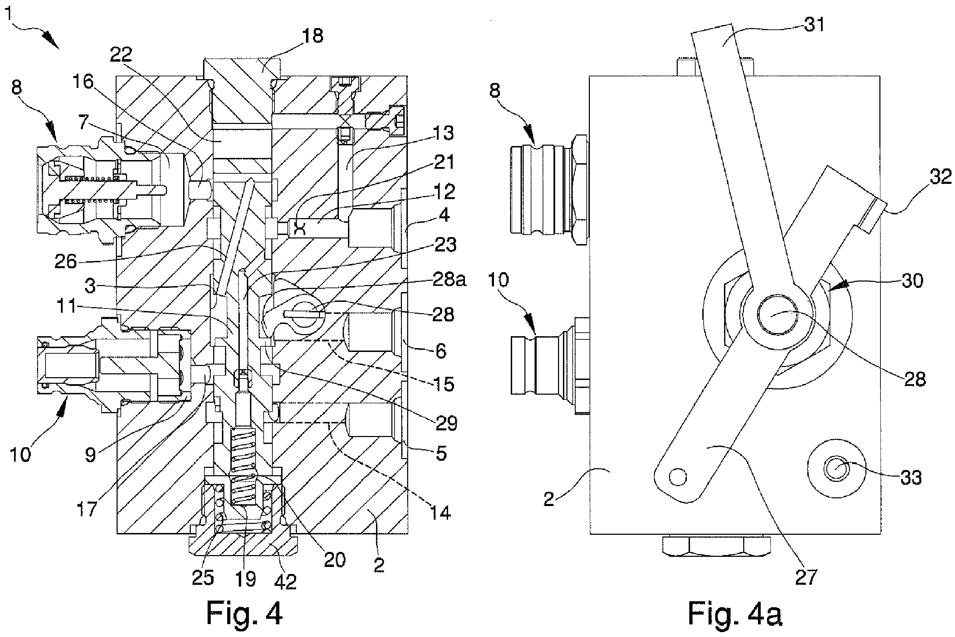

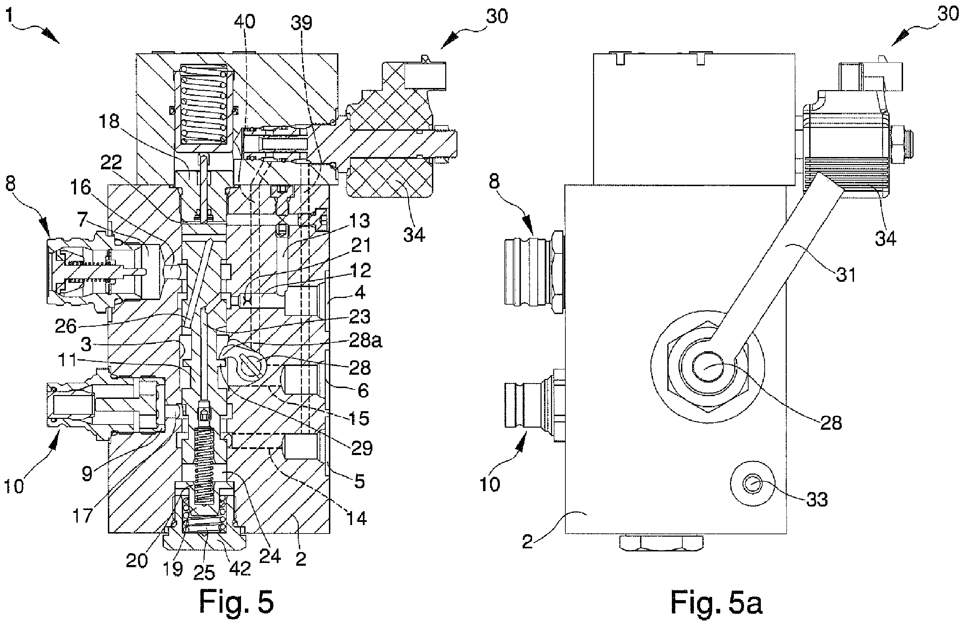

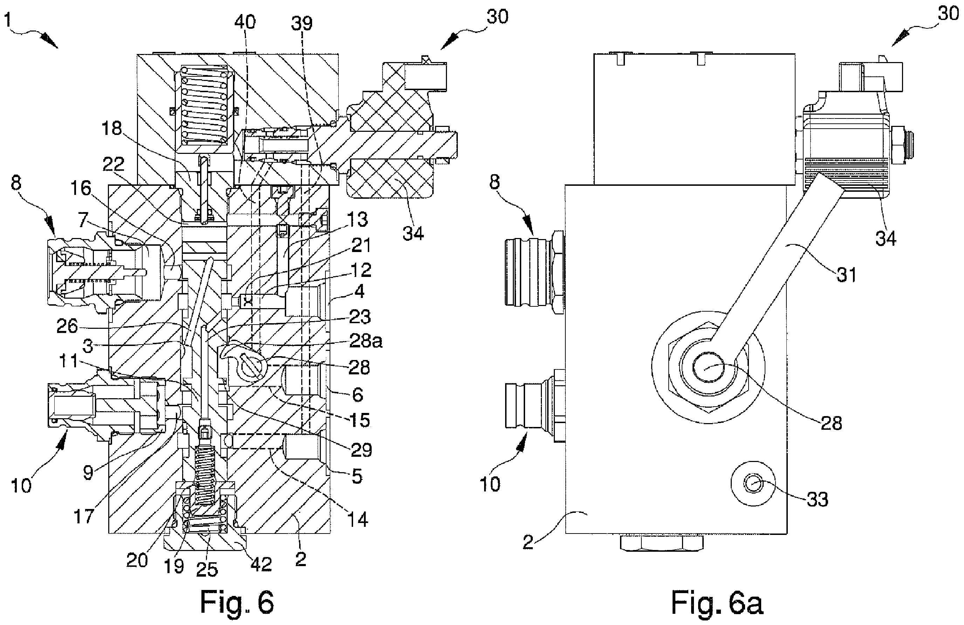

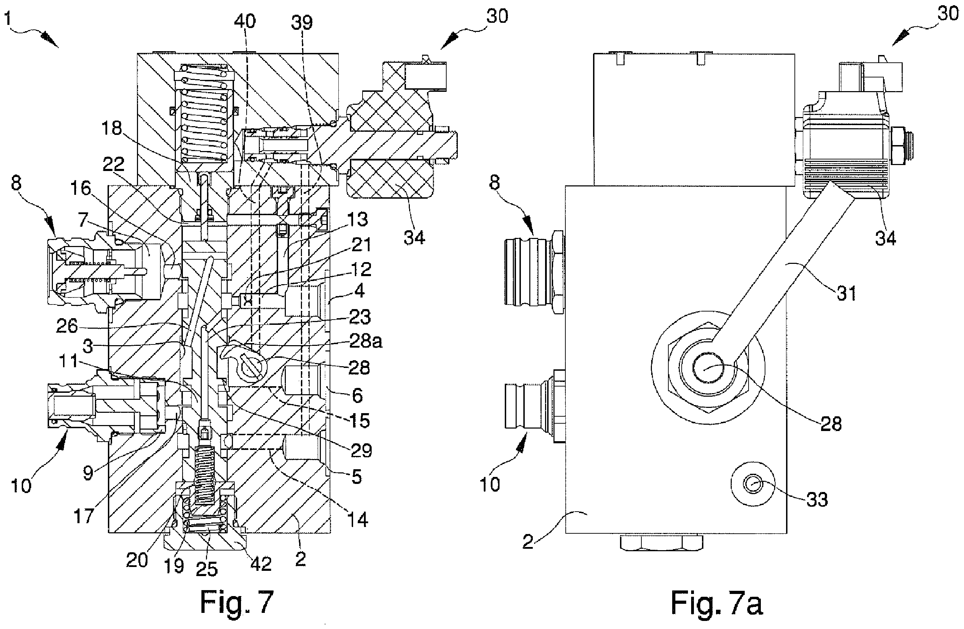

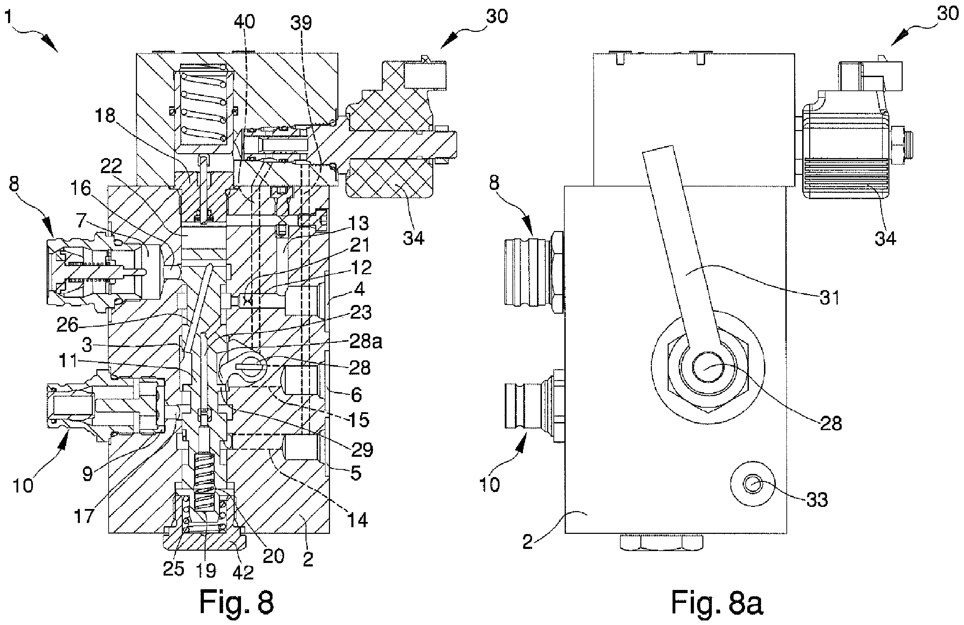

In the embodiment shown in the figures 5 to 8, the command means 30 also comprise the second lever 31, which, as in the embodiment of the figures 1 to 4, is operable manually to command the displacement of the spool 11 to the second emergency configuration.

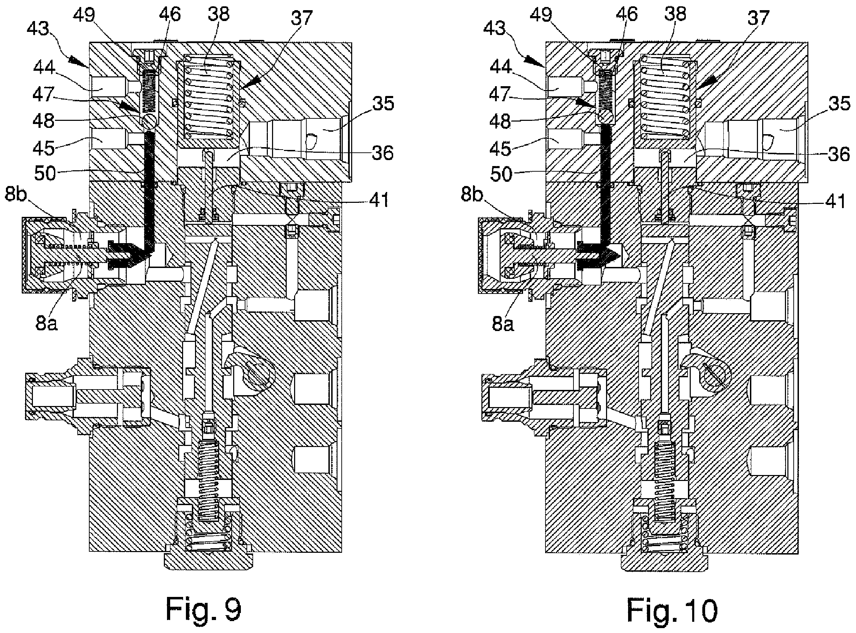

In the embodiment shown in the figures 9 and 10, the assembly 1 also comprises a piloting device 43 of the braking valve of the trailer (not illustrated in the figures) operatively connected to the first male coupling 8. The piloting device 43 comprises a command channel 44, connectable to the pump-brake of the towing vehicle (not illustrated in the figures), and a piloting channel 45, connectable to the braking valve of the trailer, wherein the command channel 44 and the piloting channel 45 are communicating with a further seat 46 within which one-way valve means 47 are arranged.

These valve means 47 are able to prevent the transit of the work fluid from the command channel 44 to the piloting channel 45 when the first male coupling 8 is disengaged from the relative female coupling and to allow the transit of the work fluid from the command channel 44 to the piloting channel 45 when the first male coupling 8 is inserted into the female coupling.

More particularly, the valve means 47 comprise at least a shutter 48 movable between an opening configuration, wherein the command channel 44 and the piloting channel 45 are put in communication between them by means of the further seat 46, and a closing configuration, wherein the command channel 44 is isolated from the piloting channel 45.

Suitably, elastic means 49 are provided able to counteract the displacement of the shutter 48 from the closing configuration to the opening configuration.

The piloting device 43 also comprises mechanical activation means 50 which are able to command the displacement of the shutter 48 from the closing configuration to the opening configuration as a result of the insertion of the first male coupling 8 within the relative female coupling. More in detail, the activation means 50 are of the type of a rod having one extremity able to interact with the shutter 48 and the opposite extremity able to interact with the closing element 8a of the control channel 8b defined within the first male coupling 8. The rod 50 is movable between a rest position, in which it is spaced from the shutter element 48, which thus remains in the closing configuration, and an active position, in which it interacts with the shutter 48 to displace it to the opening configuration.

In the rest position of the rod 50, the shutter 48 can in any case move from the closing configuration to the opening configuration following a difference in pressure between the piloting channel 45 and the command channel 44.

Until the first male coupling 8 is inserted within the relative female coupling, the shutter 48 remains in the closing configuration thereby preventing the transit of the work fluid from the pump-brake of the towing vehicle to the brake valve of the trailer. In this configuration the pressure in the towing vehicle cannot operate the brake valve of the trailer, but the work fluid under pressure along the piloting channel 45 can still be discharged towards the pump-brake of the towing vehicle bringing the shutter 48 to the opening configuration in contrast to the elastic means 49.

As a result of the insertion of the first male coupling 8 within the relative female coupling, the closing element 8a moves so as to open the control channel 8b causing the consequent displacement of the rod 50 to its active position. The rod 50 in turn interacts with the shutter 48 bringing it to the opening configuration. In this configuration the work fluid under pressure in the command channel 44, and arriving from the pump-brake, can flow away towards the piloting channel 45 and thus command the brake valve of the trailer.

With the shutter 48 in the opening configuration the work fluid can flow away from both the command channel 44 to the piloting channel 45 and in the opposite direction.

It has in practice been ascertained how the described invention achieves the intended objects and in particular the fact is underlined that the assembly forming the subject of the present invention allows, with a single device, to perform a plurality of functions.

In particular, the valve assembly forming the subject of the present invention allows discharging the pressure present in the additional port and in the control port, and consequently in the corresponding lines of the trailer, depending on the needs and conditions of emergency, such as the breaking of a pipe in the hydraulic circuit of the trailer or the need to make the hydraulic connection of the couplings in the presence of pressure inside the male couplings.

## Claims

1. Valve assembly (1) comprising a body (2) having a seat (3) communicating with at least:
- a main port (4) and a secondary port (5) connectable to the braking system of a towing vehicle and able to receive a first and a second pressure signal, respectively;
- an unloading port (6) connectable to an unloading tank;
- a control port (7) connectable to a first male coupling (8) of the towing vehicle;
- an additional port (9) connectable to a second male coupling (10) of the towing vehicle;
within said seat (3) being accommodated in a sliding manner at least a spool (11), the valve being **characterized in that** the spool assumes at least the following positions:
a normal operating position, wherein said main port (4) and said secondary port (5) are put in communication with said control port (7) and with said additional port (9), respectively;
a first emergency position, wherein said additional port (9) is put in communication with said unloading port (6), said main port (4) remaining in communication with said control port (7);
and a second emergency position, wherein said control port (7) and said additional port (9) are put in communication with said unloading port (6).

2. Valve assembly (1) according to claim 1, **characterized in that** it comprises first elastic means (20) placed between a stop element (19) of said seat (3) and said spool (11), said first elastic means (20) being able to act on the spool itself to counteract the displacement thereof to the first emergency position, and **in that** between said main port (4) and said seat (3) are placed a first connection channel (12), having at least a restriction (21), and a second connection channel (13) communicating with a first thrust chamber (22) defined within said seat (3) and acting on said spool (11) on the opposite side of said first elastic means (20), at least a first duct (23) being defined communicating with said first channel (12), downstream of said restriction (21), and with a second thrust chamber (24) acting on said spool (11) on the opposite side of said first thrust chamber (22).

3. Valve assembly (1) according to claim 2, **characterized in that** said first and second thrust chambers (22, 24) act on the opposite ends of said spool (11).

4. Valve assembly (1) according to one or more of the preceding claims, **characterized in that** it comprises second elastic means (25) placed between said stop element (19) and a closing element (42) of said seat (3) and able to counteract the displacement of said spool (11) to the second emergency position, in the first emergency position said spool (11) resting on said stop element (19).

5. Valve assembly (1) according to one or more of the preceding claims, **characterized in that** it comprises command means (30) operable to command the displacement of said spool (11) at least from the normal operating position to the first emergency position.

6. Valve assembly (1) according to one or more of the preceding claims, **characterized in that** said command means (30) are operable to command the displacement of said spool (11) to said second emergency position.

7. Valve assembly (1) according to one or more of the preceding claims, **characterized in that** said command means (30) comprise at least a first lever (27) arranged externally to said body (2), connectable to the parking brake of the towing vehicle and able to interact with said spool (11), said first lever (27) being movable between a rest position, wherein said spool (11) is free to move, and a working position, wherein said spool (11) is pushed to the first emergency position.

8. Valve assembly (1) according to one or more of the preceding claims, **characterized in that** said command means (30) comprise at least a second lever (31) arranged externally to said body (2), manually operable and able to interact with said spool (11), said second lever (31) being movable to bring the spool itself to the second emergency position.

9. Valve assembly (1) according to one or more of the preceding claims, **characterized in that** at least one of said first and said second levers (27, 31) is associated movable in rotation with said body (2) and is coupled to a pin (28) able to interact mechanically with said spool (11).

10. Valve assembly (1) according to one or more of the preceding claims, **characterized in that** said first and second levers (27, 31) are associated movable in rotation with said body (2) and are coupled to a pin (28) able to interact mechanically with said spool (11), said first lever (27) driving in rotation said second lever (31) during its stroke from the rest position to the working position, said pin (28) rotating by a predefined angle, and said second lever (31) being able to perform a further stroke, during which said first lever (27) remains stationary and said pin (28) rotates by a further angle.

11. Valve assembly (1) according to one or more of the preceding claims, **characterized in that** said command means (30) comprise at least a solenoid valve (34) having an activation channel (35) communicating with a third thrust chamber (36) acting on a thrust element (37) able to cooperate with said spool (11), said thrust element (37) being movable in contrast to third elastic means (38), and operable to selectively put in communication said activation channel (35) with said secondary port (5) or with said unloading port (6).

12. Valve assembly (1) according to one or more of the preceding claims, **characterized in that** said thrust element (37) is able to act on said spool (11) on the opposite side of said first elastic means (20) and is movable between an inactive configuration, wherein said spool is free to move, and an active configuration, wherein it operates on said spool (11) to move it from the normal operating position to said first emergency position.

13. Valve assembly (1) according to one or more of the preceding claims, **characterized in that** said thrust element (37) is able to move from the inactive to the active configuration as a result of the increase in pressure in said third thrust chamber (36) in contrast to said third elastic means (38).

14. Valve assembly (1) according to one or more of the preceding claims, **characterized in that** said thrust element (37) is able to move from the active to the inactive configuration as a result of the increase in pressure in said third thrust chamber (36) in contrast to said third elastic means (38).

15. Assembly (1) according to one or more of the preceding claims, **characterized in that** it comprises at least a piloting device (43) of braking valve of the trailer operatively connected to said first male coupling (8).

## Patentansprüche

1. Ventilbaugruppe (1), die einen Körper (2) umfasst, der einen Sitz (3) aufweist, der wenigstens in Verbindung steht mit:
- einem Hauptanschluss (4) und einem Nebenanschluss (5), die mit der Bremsanlage eines Zugfahrzeugs verbunden werden können und jeweils dazu in der Lage sind, ein erstes beziehungsweise ein zweites Drucksignal zu empfangen,
- einem Entlastungsanschluss (6), der mit einem Entlastungstank verbunden werden kann,
- einem Steuerungsanschluss (7), der mit einer ersten Steckerkupplung (8) des Zugfahrzeugs verbunden werden kann,
- einem zusätzlichen Anschluss (9), der mit einer zweiten Steckerkupplung (10) des Zugfahrzeugs verbunden werden kann,
wobei innerhalb des Sitzes (3) auf eine verschiebbare Weise wenigstens eine Spule (11) untergebracht ist, wobei das Ventil **dadurch gekennzeichnet ist, dass** die Spule wenigstens die folgenden Stellungen einnimmt:
eine normale Betriebsstellung, in welcher der Hauptanschluss (4) und der Nebenanschluss (5) jeweils in Verbindung mit dem Steuerungsanschluss (7) beziehungsweise mit dem zusätzlichen Anschluss (9) gebracht sind,
eine erste Notstellung, in welcher der zusätzliche Anschluss (9) in Verbindung mit dem Entlastungsanschluss (6) gebracht ist, wobei der Hauptanschluss (4) in Verbindung mit dem Steuerungsanschluss (7) verbleibt,
und eine zweite Notstellung, in welcher der Steuerungsanschluss (7) und der zusätzliche Anschluss (9) in Verbindung mit dem Entlastungsanschluss (6) gebracht sind.

2. Ventilbaugruppe (1) nach Anspruch 1, **dadurch gekennzeichnet, dass** sie erste elastische Mittel (20) umfasst, die zwischen einem Anschlagelement (19) des Sitzes (3) und der Spule (11) platziert sind, wobei die ersten elastischen Mittel (20) dazu in der Lage sind, auf die Spule selbst einzuwirken, um der Verschiebung derselben zu der ersten Notstellung entgegenzuwirken, und dadurch, dass zwischen dem Hauptanschluss (4) und dem Sitz (3) ein erster Verbindungskanal (12), der wenigstens eine Verengung (21) aufweist, und ein zweiter Verbindungskanal (13), der mit einer ersten Schubkammer (22) in Verbindung steht, die innerhalb des Sitzes (3) definiert ist und auf die Spule (11) auf der entgegengesetzten Seite der ersten elastischen Mittel (20) einwirkt, platziert sind, wobei wenigstens eine erste Leitung (23) definiert ist, die mit dem ersten Kanal (12), stromabwärts von der Verengung (21), und mit einer zweiten Schubkammer (24), die auf die Spule (11) auf der entgegengesetzten Seite der ersten Schubkammer (22) einwirkt, in Verbindung steht.

3. Ventilbaugruppe (1) nach Anspruch 2, **dadurch gekennzeichnet, dass** die ersten und zweiten Schubkammern (22, 24) auf die entgegengesetzten Enden der Spule (11) einwirken.

4. Ventilbaugruppe (1) nach einem oder mehreren der vorhergehenden Ansprüche, **dadurch gekennzeichnet, dass** sie zweite elastische Mittel (25) umfasst, die zwischen dem Anschlagelement (19) und einem Schließelement (42) des Sitzes (3) platziert und dazu in der Lage sind, der Verschiebung der Spule (11) zu der zweiten Notstellung entgegenzuwirken, wobei die Spule (11) in der ersten Notstellung auf dem Anschlagelement (19) ruht.

5. Ventilbaugruppe (1) nach einem oder mehreren der vorhergehenden Ansprüche, **dadurch gekennzeichnet, dass** sie Befehlsmittel (30) umfasst, die bedienbar sind, um die Verschiebung der Spule (11) wenigstens von der normalen Betriebsstellung zu der ersten Notstellung zu befehlen.

6. Ventilbaugruppe (1) nach einem oder mehreren der vorhergehenden Ansprüche, **dadurch gekennzeichnet, dass** die Befehlsmittel (30) bedienbar sind, um die Verschiebung der Spule (11) zu der zweiten Notstellung zu befehlen.

7. Ventilbaugruppe (1) nach einem oder mehreren der vorhergehenden Ansprüche, **dadurch gekennzeichnet, dass** die Befehlsmittel (30) wenigstens einen ersten Hebel (27) umfassen, der außerhalb des Körpers (2) angeordnet ist, mit der Feststellbremse des Zugfahrzeugs verbindbar ist und dazu in der Lage ist, mit der Spule (11) in Wechselwirkung zu treten, wobei der erste Hebel (27) beweglich ist zwischen einer Ruhestellung, in der sich die Spule (11) frei bewegen kann, und einer Arbeitsstellung, in der die Spule (11) zu der ersten Notstellung geschoben wird.

8. Ventilbaugruppe (1) nach einem oder mehreren der vorhergehenden Ansprüche, **dadurch gekennzeichnet, dass** die Befehlsmittel (30) wenigstens einen zweiten Hebel (31) umfassen, der außerhalb des Körpers (2) angeordnet ist, manuell zu betätigen ist und dazu in der Lage ist, mit der Spule (11) in Wechselwirkung zu treten, wobei der zweite Hebel (31) beweglich ist, um die Spule selbst zu der zweiten Notstellung zu bringen.

9. Ventilbaugruppe (1) nach einem oder mehreren der vorhergehenden Ansprüche, **dadurch gekennzeichnet, dass** wenigstens einer von den ersten und dem zweiten Hebeln (27, 31) in Drehung beweglich mit dem Körper (2) verbunden ist und mit einem Stift (28) gekoppelt ist, der dazu in der Lage ist, mechanisch mit der Spule (11) in Wechselwirkung zu treten.

10. Ventilbaugruppe (1) nach einem oder mehreren der vorhergehenden Ansprüche, **dadurch gekennzeichnet, dass** die ersten und zweiten Hebel (27, 31) in Drehung beweglich mit dem Körper (2) verbunden sind und mit einem Stift (28) gekoppelt sind, der dazu in der Lage ist, mechanisch mit der Spule (11) in Wechselwirkung zu treten, wobei der erste Hebel (27) den zweiten Hebel (31) während seines Hubs von der Ruhestellung zu der Arbeitsstellung in Drehung antreibt, wobei sich der Stift (28) um einen vordefinierten Winkel dreht, und der zweite Hebel (31) dazu in der Lage ist einen weiteren Hub durchzuführen, während dessen der erste Hebel (27) stationär bleibt und sich der Stift (28) um einen weiteren Winkel dreht.

11. Ventilbaugruppe (1) nach einem oder mehreren der vorhergehenden Ansprüche, **dadurch gekennzeichnet, dass** die Befehlsmittel (30) wenigstens ein Magnetventil (34) umfassen, das einen Aktivierungskanal (35) aufweist, der mit einer dritten Schubkammer (36) in Verbindung steht, die auf ein Schubelement (37) einwirkt, das dazu in der Lage ist, mit der Spule (11) zusammenzuwirken, wobei das Schubelement (37) im Gegensatz zu dritten elastischen Mitteln (38) beweglich ist, und bedienbar ist, um selektiv den Aktivierungskanal (35) in Verbindung mit dem Nebenanschluss (5) oder mit dem Entlastungsanschluss (6) zu bringen.

12. Ventilbaugruppe (1) nach einem oder mehreren der vorhergehenden Ansprüche, **dadurch gekennzeichnet, dass** das Schubelement (37) dazu in der Lage ist, auf der entgegengesetzten Seite der ersten elastischen Mittel (20) auf die Spule (11) einzuwirken, und beweglich ist zwischen einer inaktiven Konfiguration, in der sich die Spule frei bewegen kann, und einer aktiven Konfiguration, in der es auf die Spule (11) wirkt, um sie von der normalen Betriebsstellung zu der ersten Notstellung zu bewegen.

13. Ventilbaugruppe (1) nach einem oder mehreren der vorhergehenden Ansprüche, **dadurch gekennzeichnet, dass** das Schubelement (37) dazu in der Lage ist, sich als Ergebnis der Zunahme beim Druck in der dritten Schubkammer (36) im Gegensatz zu den dritten elastischen Mitteln (38) von der inaktiven zu der aktiven Konfiguration zu bewegen.

14. Ventilbaugruppe (1) nach einem oder mehreren der vorhergehenden Ansprüche, **dadurch gekennzeichnet, dass** das Schubelement (37) dazu in der Lage ist, sich als Ergebnis der Zunahme beim Druck in der dritten Schubkammer (36) im Gegensatz zu den dritten elastischen Mitteln (38) von der aktiven zu der inaktiven Konfiguration zu bewegen.

15. Baugruppe (1) nach einem oder mehreren der vorhergehenden Ansprüche, **dadurch gekennzeichnet, dass** sie wenigstens eine Führungseinrichtung (43) eines Bremsventils des Anhängers umfasst, die wirksam mit der ersten Steckerkupplung (8) verbunden ist.

## Revendications

1. Ensemble soupape (1), comprenant un corps (2) ayant un siège (3) communiquant avec au moins :
- un orifice principal (4) et un orifice secondaire (5) pouvant être raccordés au système de freinage d'un véhicule de remorquage et capables de recevoir un premier et un second signal de pression, respectivement ;
- un orifice de déchargement (6) pouvant être raccordé à un réservoir de déchargement ;
- un orifice de commande (7) pouvant être raccordé à un premier couplage mâle (8) du véhicule de remorquage ;
- un orifice supplémentaire (9) pouvant être raccordé à un second couplage mâle (10) du véhicule de remorquage ;
à l'intérieur dudit siège (3) étant logé de manière coulissante au moins un tiroir (11), la soupape étant **caractérisée en ce que** le tiroir adopte au moins les positions suivantes :
une position de fonctionnement normale, dans laquelle ledit orifice principal (4) et ledit orifice secondaire (5) sont mis en communication avec ledit orifice de commande (7) et avec ledit orifice supplémentaire (9), respectivement ;
une première position d'urgence, dans laquelle ledit orifice supplémentaire (9) est mis en communication avec ledit orifice de déchargement (6), ledit orifice principal (4) restant en communication avec ledit orifice de commande (7) ;
et une seconde position d'urgence, dans laquelle ledit orifice de commande (7) et ledit orifice supplémentaire (9) sont mis en communication avec ledit orifice de déchargement (6).

2. Ensemble soupape (1) selon la revendication 1, **caractérisé en ce qu'**il comprend des premiers moyens élastiques (20) placés entre un élément d'arrêt (19) dudit siège (3) et ledit tiroir (11), lesdits premiers moyens élastiques (20) étant capables d'agir sur le tiroir lui-même pour contrer le déplacement de celui-ci vers la première position d'urgence, et **en ce que**, entre ledit orifice principal (4) et ledit siège (3), sont placés un premier canal de raccordement (12), ayant au moins une restriction (21), et un second canal de raccordement (13) communiquant avec une première chambre de poussée (22) définie à l'intérieur dudit siège (3) et agissant sur ledit tiroir (11) sur le côté opposé desdits premiers moyens élastiques (20), au moins une première conduite (23) étant définie, communiquant avec ledit premier canal (12), en aval de ladite restriction (21), et avec une deuxième chambre de poussée (24) agissant sur ledit tiroir (11) sur le côté opposé de ladite première chambre de poussée (22).

3. Ensemble soupape (1) selon la revendication 2, **caractérisé en ce que** lesdites première et seconde chambres de poussée (22, 24) agissent sur les extrémités opposées dudit tiroir (11).

4. Ensemble soupape (1) selon une ou plusieurs des revendications précédentes, **caractérisé en ce qu'**il comprend des deuxièmes moyens élastiques (25) placés entre ledit élément d'arrêt (19) et un élément de fermeture (42) dudit siège (3) et capables de contrer le déplacement dudit tiroir (11) vers la seconde position d'urgence, dans la première position d'urgence ledit tiroir (11) reposant sur ledit élément d'arrêt (19).

5. Ensemble soupape (1) selon une ou plusieurs des revendications précédentes, **caractérisé en ce qu'**il comprend des moyens de commande (30) utilisables pour commander le déplacement dudit tiroir (11) au moins depuis la position de fonctionnement normale jusqu'à la première position d'urgence.

6. Ensemble soupape (1) selon une ou plusieurs des revendications précédentes, **caractérisé en ce que** lesdits moyens de commande (30) sont utilisables pour commander le déplacement dudit tiroir (11) vers ladite seconde position d'urgence.

7. Ensemble soupape (1) selon une ou plusieurs des revendications précédentes, **caractérisé en ce que** lesdits moyens de commande (30) comprennent au moins un premier levier (27) agencé de façon externe audit corps (2), pouvant être raccordé au frein de stationnement du véhicule de remorquage et capable d'interagir avec ledit tiroir (11), ledit premier levier (27) étant mobile entre une position de repos, dans laquelle ledit tiroir (11) est libre de se déplacer, et une position active, dans laquelle ledit tiroir (11) est poussé vers la première position d'urgence.

8. Ensemble soupape (1) selon une ou plusieurs des revendications précédentes, **caractérisé en ce que** lesdits moyens de commande (30) comprennent au moins un second levier (31) agencé de façon externe audit corps (2), manuellement utilisables et capables d'interagir avec ledit tiroir (11), ledit second levier (31) étant mobile pour mettre le tiroir lui-même dans la seconde position d'urgence.

9. Ensemble soupape (1) selon une ou plusieurs des revendications précédentes, **caractérisé en ce qu'**au moins un desdits premier et second leviers (27, 31) est associé, de façon mobile en rotation, audit corps (2) et est couplé à une goupille (28) capable d'interagir mécaniquement avec ledit tiroir (11).

10. Ensemble soupape (1) selon une ou plusieurs des revendications précédentes, **caractérisé en ce que** lesdits premier et second leviers (27, 31) sont associés, de façon mobile en rotation, audit corps (2) et sont couplés à une goupille (28) capable d'interagir mécaniquement avec ledit tiroir (11), ledit premier levier (27) entraînant en rotation ledit second levier (31) durant sa course depuis la position de repos jusqu'à la position active, ladite goupille (28) entrant en rotation selon un angle prédéfini, et ledit second levier (31) étant capable de réaliser une course supplémentaire, durant laquelle ledit premier levier (27) reste stationnaire et ladite goupille (28) entre en rotation selon un angle supplémentaire.

11. Ensemble soupape (1) selon une ou plusieurs des revendications précédentes, **caractérisé en ce que** lesdits moyens de commande (30) comprennent au moins une soupape à solénoïde (34) ayant un canal d'activation (35) communiquant avec une troisième chambre de poussée (36) agissant sur un élément de poussée (37) capable de coopérer avec ledit tiroir (11), ledit élément de poussée (37) étant mobile en contraste avec des troisièmes moyens élastiques (38), et utilisables pour sélectivement mettre en communication ledit canal d'activation (35) avec ledit orifice secondaire (5) ou avec ledit orifice de déchargement (6).

12. Ensemble soupape (1) selon une ou plusieurs des revendications précédentes, **caractérisé en ce que** ledit élément de poussée (37) est capable d'agir sur ledit tiroir (11) sur le côté opposé desdits premiers moyens élastiques (20) et est mobile entre une configuration inactive, dans laquelle ledit tiroir est libre de se déplacer, et une configuration active, dans laquelle il fonctionne sur ledit tiroir (11) pour le déplacer depuis la position de fonctionnement normale jusqu'à ladite première position d'urgence.

13. Ensemble soupape (1) selon une ou plusieurs des revendications précédentes, **caractérisé en ce que** ledit élément de poussée (37) est capable de se déplacer depuis la position inactive jusqu'à la configuration active en conséquence de l'augmentation de pression dans ladite troisième chambre de poussée (36) en contraste avec lesdits troisièmes moyens élastiques (38).

14. Ensemble soupape (1) selon une ou plusieurs des revendications précédentes, **caractérisé en ce que** ledit élément de poussée (37) est capable de se déplacer depuis la configuration active jusqu'à la configuration inactive en conséquence de l'augmentation de pression dans ladite troisième chambre de poussée (36) en contraste avec lesdits troisièmes moyens élastiques (38).

15. Ensemble (1) selon une ou plusieurs des revendications précédentes, **caractérisé en ce qu'**il comprend au moins un dispositif de pilotage (43) de soupape de freinage de la remorque, fonctionnellement raccordé audit premier couplage mâle (8).
